# EUROPÄISCHE PATENTSCHRIFT

(11) **EP 3 301 334 B1**
(45) Veröffentlichungstag und Bekanntmachung des Hinweises auf die Patenterteilung: **03.04.2019**
(21) Anmeldenummer: 17001383.3
(22) Anmeldetag: 14.08.2017
(51) Int. Cl.: F16K 31/06, F16K 1/36

(54) **SITZVENTIL MIT ELEKTROMAGNETISCHER BETÄTIGUNG**
SEAT VALVE WITH ELECTROMAGNETIC ACTUATION
ROBINET À SOUPAPE À FONCTIONNEMENT ÉLECTROMAGNÉTIQUE

(30) Priorität: 12.09.2016 DE 102016011059
(43) Veröffentlichungstag der Anmeldung: 04.04.2018
(73) Patentinhaber: Thomas Magnete GmbH, 57562 Herdorf (DE)
(72) Erfinder: Petri, Wolfgang, 57290 Neunkirschen (DE); Pilz, Stefan, 57290 Neunkirchen (DE); Lütz, Thomas, 57076 Siegen (DE); Jung, Marco, 57520 Langenbach (DE); Schäfer, Willi, 57520 Neunkhausen (DE); Bieler, Julia, 57080 Siegen (DE)

(56) Entgegenhaltungen:
- DE-A1-102014 217 447

## Beschreibung

Die Erfindung betrifft ein Sitzventil entsprechend dem Oberbegriff des ersten Patentanspruchs.

### Stand der Technik:

Sitzventile sind in den Anwendungsbereichen der Hydraulik, der Pneumatik und der Prozesstechnik bekannt und weit verbreitet. Auch Sitzventile, die von einem Elektromagneten betätigt werden, sind bekannt. Dabei sind sowohl durch die Kraft des Elektromagneten schließende Sitzventile als auch durch die Kraft des Elektromagneten öffnende Sitzventile bekannt. Die jeweilige Rückstellung des Sitzventils für den unbestromten Zustand des Elektromagneten wird meist durch eine Feder bewirkt, es sind aber auch Ausführungen bekannt, bei denen die Rückstellung durch die Druckdifferenz der angeschlossenen Fluidströme bewirkt wird.

Bei dem Schließen des Sitzventils können störende Schaltgeräusche auftreten, vor allem dann, wenn der Schließvorgang von einer Druckdifferenz der angeschlossenen Fluidströme unterstützt wird. Es ist bekannt, durch eine Drosselung der betroffenen Fluidströme oder durch ein Abbremsen des Elektromagneten die Schaltgeräusche zu vermindern, aber diese Maßnahmen haben in einem weiten Temperaturbereich für den Einsatz des Sitzventils nur sehr begrenzte Wirkung.

Die DE 10 2014 217 447 A1 offenbart einen Ventilanker für ein Magnetventil, an dessen einem Ende eine Vertiefung angeordnet ist, welche ein mit einem Ventilsitz zusammenwirkendes Schließelement mit einem Schließkörper aufnimmt, und eine korrespondierende Ventilpatrone für ein Magnetventil mit einem solchen Ventilanker. Zwischen dem Schließkörper und der Vertiefung ist ein elastisches Dämpfungselement angeordnet, welches einen beim Auftreffen des Schließkörpers auf dem Ventilsitz entstehenden Impuls dämpft.

### Aufgabe:

Die Schaltgeräusche bei einem Schließen des Sitzventils sollen unabhängig von der Temperatur des Fluids im Sitzventil merklich vermindert werden, ohne die Herstellkosten des Sitzventils erheblich zu erhöhen.

Die Aufgabe wird durch die Merkmale des ersten Patentanspruchs gelöst, vorteilhafte Weiterbildungen der Erfindung sind in den Unteransprüchen angegeben.

Zwischen den Fluidanschlüssen, hier P und TN genannt, ist eine Dichtung angeordnet, die einen Kurzschluss durch den Spalt zwischen der Einbaubohrung und der Ventilhülse verhindert.
Hier wird vorteilhafterweise diese Dichtung als Lippendichtung ausgeführt. Sie dichtet wegen ihrer Einbaulage eine positive Druckdifferenz zwischen P und TN ab, aber sie lässt bei einer negativen Druckdifferenz zwischen P und TN einen geringen Fluidstrom zwischen der Lippe der Dichtung und der Einbaubohrung passieren. Wenn das selten und bei geringer Druckdifferenz geschieht, stellt das keine Gefährdung der Lebensdauer der Dichtung dar.

Die wichtigsten Schaltgeräusche treten auf, wenn der Dichtkörper des Sitzventils auf den Dichtsitz aufschlägt. Sind beide Bauteile aus Metall, wird Körperschall durch die anderen Bauteile des Sitzventils und auf die mechanisch damit verbundenen weiteren Bauteile übertragen. An den großen Oberflächen dieser weiteren Bauteile erzeugt dann der Körperschall Luftschall, der von Personen in der Umgebung wahrgenommen wird.
Die Reduzierung des weitergeleiteten Schaltgeräusches erfolgt durch zwei Maßnahmen, die sich in vorteilhafter Weite ergänzen.

Erstens wird der Dichtkörper des Sitzventils aus einem Kunststoff hergestellt, der einen erheblich geringeren Elastizitätsmodul und eine erheblich höhere Dämpfung aufweist als die für diesen Zweck geeigneten Metallsorten. Damit wird weniger Körperschall in die Stahlbauteile des Sitzventils eingeleitet.

Zweitens bewirkt der Aufbau des Sitzventils, dass der Körperschall auf dem Weg zu den weiteren Bauteilen außerhalb des Sitzventils zwei Grenzen zwischen Materialien mit sehr unterschiedlichen Elastizitätsmodulen überwinden muss, und bei jeder Grenzüberschreitung erheblich gedämpft wird. Dies wird erreicht, indem die Umspritzung und der Befestigungsflansch des Sitzventils aus einem thermoplastischen Kunststoff hergestellt wird, so dass der Körperschall von der Ventilhülse und anderen Bauteilen aus Stahl erst auf den thermoplastischen Kunststoff des Flansches und von dort auf die Befestigungsfläche für das Sitzventil übergeht. Als thermoplastischer Kunststoff wird beispielsweise glasfaserverstärktes PA6 oder PA6.6 verwendet.

Beide Maßnahmen ergänzen sich in vorteilhafter Weise, weil das Schallspektrum, das von der Materialpaarung des Dichtkörpers und des Dichtsitzes bei einem Aufprall abgestrahlt wird, von dem thermoplastischen Kunststoff der Umspritzung und des Flansches gut gedämpft wird. Eine Maßnahme allein könnte die Schaltgeräusche nicht annähernd so gut dämpfen.

Die dargestellte Lehre zur Verminderung der Schaltgeräusche lässt sich sowohl für elektromagnetisch schließende als auch für elektromagnetisch öffnende Sitzventile anwenden, und auch für Sitzventile, die von einer Druckdifferenz geöffnet werden.
Der Werkstoff für den Dichtkörper muss sehr verschleißfest, medienbeständig und temperaturbeständig sein, daher kommen nur wenige Kunststoffwerkstoffe in Frage. Durch Versuche und aus der Literatur konnte ermittelt werden, dass sich die Werkstoffe
PEEK: Polyetheretherketon
PEI: Polyetherimid
PESU: Polyethersulfon
LCP: Liquid Crystal Polymer
für diese Anwendung eignen. Die Auswahl zwischen diesen Werkstoffen wird man vorteilhafterweise nach den Verarbeitungsbedingungen und den Gesamtkosten für das Sitzventil treffen.

Das Ventil ist vorteilhafterweise als Einbauventil ausgeführt, das in eine Einbaubohrung eingeschoben und mit einem Flansch an einer Befestigungsfläche befestigt ist.

### Anwendung:

Das erfindungsgemäße Sitzventil findet in einer hydraulischen Bremsanlage eines Fahrzeugs eine Anwendung, aber die technische Lehre dieser Erfindung lässt sich auch auf Sitzventile in Getrieben oder Hydraulikanlagen anwenden.

### Bilder:

Fig. 1 zeigt ein mittels einer elektromagnetischen Kraft oder einer Druckdifferenz öffnendes Sitzventil mit den erfinderischen Merkmalen.
Fig. 2 zeigt ein mittels einer elektromagnetischen Kraft schließendes Sitzventil mit den erfinderischen Merkmalen.

### Beispielhafte Ausführung:

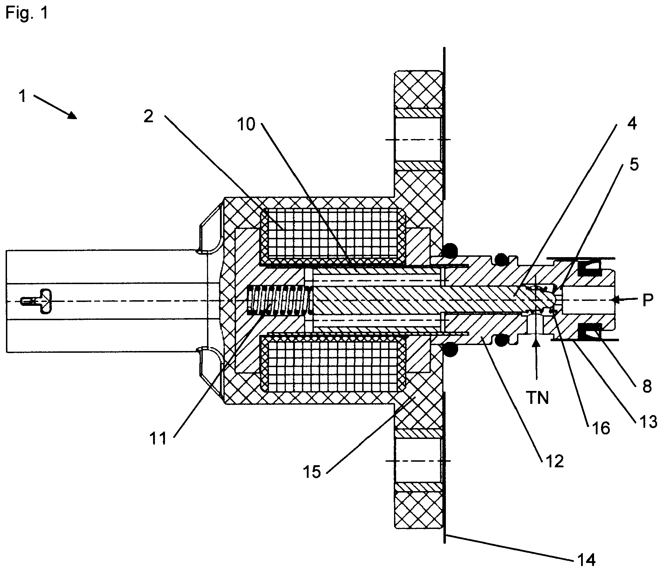

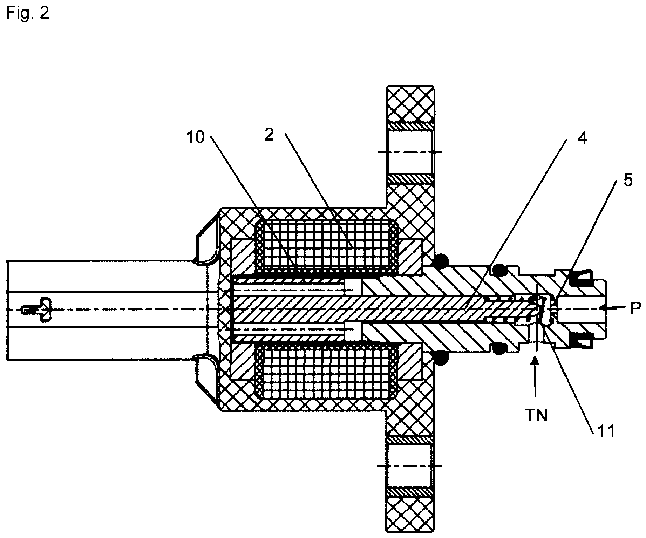

Ein Sitzventil (1) gemäß Fig. 1 oder Fig. 2 wird von einem Elektromagneten (2) betätigt und weist eine Ventilhülse (12) mit einem Dichtsitz (5), einen mit einem Anker (10) des Elektromagneten (2) kraftschlüssig verbundenen Dichtkörper (4) und zwei Anschlüsse für Fluidströme auf, nämlich die Anschlüsse P und TN. Durch das Anlegen des Dichtkörpers (4) an den Dichtsitz (5) erfolgt ein Schließen der fluidischen Verbindung von P nach TN.
Der Dichtköper (4) ist aus einem Kunststoff hergestellt ist, der aus der Gruppe (PEEK, PEI, PASU und LCP) ausgewählt ist.
Der unvermeidbare Kraftfluss zur Weiterleitung von Körperschall von dem Dichtsitz (5) zu einer Befestigungsfläche (14) weist mindestens einen Übergang von einem metallischen Bauteil zu einem Bauteil (15) aus Kunststoff und einen Übergang von dem Bauteil (15) aus Kunststoff zu einem anderen metallischen Bauteil auf, beispielsweise zu einer Befestigungsfläche (14) eines Gerätes.

In einer ersten Ausführung des Sitzventils gemäß Fig.1 tritt im unbestromten Zustand des Elektromagneten (2) ein Fluidstrom von P nach TN nur dann auf, wenn die Druckdifferenz zwischen den Anschlüssen P und TN einen Grenzwert von Δp_{G} überschreitet, weil die Kraft der genannten Druckdifferenz die Kraftsumme von Federn (11, 16) überwindet und weil dabei der Dichtkörper (4) aus seinem Dichtsitz (5) gedrückt wird, wobei in dem unbestromten Zustand des Elektromagneten (2) kein Fluidstrom von P nach TN auftritt, wenn die genannte Druckdifferenz kleiner als Δp_{G} ist, weil dann der Dichtkörper (4) in seinem Dichtsitz (5) verbleibt.
Bei dieser Ausführung tritt im bestromten Zustand des Elektromagneten (2) auch bei geringerer Druckdifferenz als Δp_{G} ein Fluidstrom von P nach TN auf, weil die Summe der Kräfte des Elektromagneten (2) und der genannten Druckdifferenz die Kraft der Federn (11, 16) überwindet, wobei die Summe der Kräfte den Dichtkörper (4) aus dem Dichtsitz (5) drückt, wobei die fluidische Verbindung zwischen den Anschlüssen P und TN geöffnet wird.

In einer zweiten Ausführung des Sitzventils gemäß Fig. 2 drückt in einem unbestromten Zustand des Elektromagneten (2) die Feder (11) den Dichtkörper (4) aus dem Dichtsitz (5), während in einem bestromten Zustand des Elektromagneten die Kraft des Elektromagneten (2) die Kräfte der Feder (11) und der Druckdifferenz zwischen den Anschlüssen P und TN überwindet und den Dichtkörper (4) in den Dichtsitz (5) drückt, wobei die fluidische Verbindung zwischen den Anschlüssen P und TN geschlossen wird.

In einer vorteilhaften Ausführung des Sitzventils ist zwischen den Anschlüssen P und TN eine statische aus einem Elastomermaterial hergestellte Dichtung (8), die als Lippendichtung ausgeführt ist, in einer äußeren Nut der Ventilhülse (12) angeordnet.
Wenn der Druck am Anschluss P größer oder gleich dem Druck am Anschluss TN ist, liegt die Dichtung an einer Einbaubohrung (13) mit ihrer Dichtlippe an, wobei die Dichtung (8) dann, wenn der Druck am Anschluss TN den Druck am Anschluss P überschreitet, ihre Dichtfunktion verliert und einen Fluidstrom vom Anschluss TN zum Anschluss P freigibt, weil die Dichtlippe von der Einbaubohrung abgehoben wird.

### Liste der Bezugszeichen

- 1.: Sitzventil
- 2.: Elektromagnet
- 4.: Dichtkörper
- 5.: Dichtsitz
- 8.: Dichtung
- 10.: Anker
- 11.: Feder
- 12.: Ventilhülse
- 13.: Einbaubohrung
- 14.: Befestigungsfläche
- 15.: Bauteil aus Kunststoff
- 16.: Zweite Feder

- P: Erster Anschluss für Fluidstrom
- TN: Zweiter Anschluss für Fluidstrom
- I1: Grenzwert für den elektrischen Strom
- Δp_{G}: Grenzwert für die Druckdifferenz

## Patentansprüche

1. Ein von einem Elektromagneten (2) betätigtes Sitzventil (1) weist eine Ventilhülse (12) mit einem Dichtsitz (5), einen mit einem Anker (10) des Elektromagneten (2) kraftschlüssig verbundenen Dichtkörper (4) und zwei Anschlüsse für Fluidströme auf, nämlich die Anschlüsse P und TN, wobei durch das Anlegen des Dichtkörpers (4) an den Dichtsitz (5) ein Schließen einer fluidischen Verbindung von den Anschlüssen P nach TN erfolgt und der Dichtköper (4) aus einem Kunststoff hergestellt ist, der aus der Gruppe PEEK, PEI, PASU und LCP ausgewählt ist, **dadurch gekennzeichnet, dass** der Kraftfluss zur Befestigung und zur Weiterleitung von Körperschall von dem Dichtsitz (5) zu einer Befestigungsfläche (14) mindestens einen Übergang von einem metallischen Bauteil zu einem Bauteil (15) aus Kunststoff und einen Übergang von dem Bauteil (15) aus Kunststoff zu der Befestigungsfläche (14) eines anderen metallischen Bauteils aufweist, und **dadurch gekennzeichnet, dass** zwischen den Anschlüssen P und TN eine statische aus einem Elastomermaterial hergestellte Dichtung (8), die als Lippendichtung ausgeführt ist, in einer äußeren Nut der Ventilhülse (12) angeordnet ist und so ausgebildet ist, dass sie bei Einbau des Sitzventils in eine Einbaubohrung (13) dann, wenn der Druck
am Anschluss P nicht kleiner ist als der Druck am Anschluss TN, mit ihrer Dichtlippe an der Einbaubohrung (13) anliegt, wobei die Dichtung (8) dann, wenn der Druck am Anschluss TN den Druck am Anschluss P überschreitet, ihre Dichtfunktion verliert, weil die Dichtlippe der Dichtung (8) von der Einbaubohrung abgehoben wird, wobei die Dichtung (8) einen Fluidstrom vom Anschluss TN zum Anschluss P freigibt.

2. Sitzventil nach Anspruch 1, **dadurch gekennzeichnet, dass** in einem unbestromten Zustand des Elektromagneten (2) ein Fluidstrom von P nach TN nur dann auftritt, wenn die Druckdifferenz zwischen den Anschlüssen P und TN einen Grenzwert von Δp_{G} überschreitet, weil die Kraft der genannten Druckdifferenz die Kraftsumme von Federn (11, 16) überwindet und weil dabei der Dichtkörper (4) von den genannten Kräften aus einem ersten Dichtsitz (5) gedrückt wird, wobei in dem unbestromten Zustand des Elektromagneten (2) kein Fluidstrom von P nach TN auftritt, wenn die genannte Druckdifferenz kleiner als Δp_{G} ist,
und dass im bestromten Zustand des Elektromagneten (2) auch bei geringerer Druckdifferenz als Δp_{G} ein Fluidstrom von P nach TN auftritt, weil die Summe der Kräfte des Elektromagneten (2) und der genannten Druckdifferenz zwischen den Anschlüssen P und TN die Kraft der Federn (11, 16) überwindet, wobei die Summe der Kräfte den Dichtkörper (4) aus dem Dichtsitz (5) drückt.

3. Sitzventil nach Anspruch 1, **dadurch gekennzeichnet, dass** in einem unbestromten Zustand des Elektromagneten (2) die Feder (11) den Dichtkörper (4) aus dem Dichtsitz (5) drückt
und dass in einem bestromten Zustand des Elektromagneten die Kraft des Elektromagneten (2) die Kräfte der Feder (11) und der Druckdifferenz zwischen den Anschlüssen P und TN überwindet und den Dichtkörper (4) in den Dichtsitz (5) drückt.

## Claims

1. Seat valve (1) actuated by an electromagnet (2) has a valve sleeve (12) with a sealing seat (5), a sealing body (4) connected by a force fit to an armature (10) of the electromagnet (2) and two ports for fluid flows, namely the ports P and TN, closure of a fluidic connection of the ports P to TN being carried out by placing the sealing body(4) on the sealing seat (5) and the sealing body (4) being produced from a plastic which is selected from the group PEEK, PEI, PASU and LCP,
**characterized in that**
the force flow for fastening and transmitting structure-borne sound from the sealing seat (5) to a fastening surface (14) has at least one transition from a metallic component to a component (15) made of plastic and a transition from the component (15) made of plastic to the fastening surface (14) of another metallic component, and
**characterized in that**
between the ports P and TN, a static seal (8) which is embodied as a lip seal produced from an elastomer material is arranged in an external groove in the valve sleeve (12) and is formed in such a way that, when the seat valve is installed in an installation hole (13), when the pressure on the port P is no lower than the pressure on the port TN, the said seal rests with its sealing lip on the installation hole (13), wherein, when the pressure on the port TN exceeds the pressure on the port P, the seal (8) loses its sealing function, because the sealing lip of the seal (8) is lifted off the installation opening, wherein the seal (8) enables a fluid flow from the port TN to the port P.

2. Seat valve according to Claim 1, **characterized in that** in a de-energized state of the electromagnet (2), a fluid flow from P to TN occurs only when the pressure difference between the ports P and TN exceeds a limiting value of Δp_{G}, since the force of the aforementioned pressure difference overcomes the total force of springs (11, 16), and since the sealing body (4) is forced out of a first sealing seat (5) by the aforementioned forces, wherein, in the de-energized state of the electromagnet (2), no fluid flow from P to TN occurs when the aforementioned pressure difference is less than Δp_{G},
and **in that** in the energized state of the electromagnet (2), even with a lower pressure difference than Δp_{G}, a fluid flow from P to TN occurs, since the sum of the forces of the electromagnet (2) and the aforementioned pressure difference between the ports P and TN overcomes the force of the springs (11, 16), the sum of the forces forcing the sealing body (4) out of the sealing seat (5).

3. Seat valve according to Claim 1, **characterized in that** in a de-energized state of the electromagnet (2), the spring (11) forces the sealing body (4) out of the sealing seat (5),
and **in that** in an energized state of the electromagnet, the force of the electromagnet (2) overcomes the forces of the springs (11) and the pressure difference between the ports P and TN and forces the sealing body (4) into the sealing seat (5).

## Revendications

1. Robinet à soupape (1) actionné par un électroaimant (2), présentant une douille de soupape (12) avec un siège d'étanchéité (5), un corps d'étanchéité (4) assemblé par force à un induit (10) de l'électroaimant (2), et deux raccords pour des courants de fluide, à savoir les raccords P et TN, dans lequel l'application du corps d'étanchéité (4) sur le siège d'étanchéité (5) entraîne une fermeture d'une liaison fluidique des raccords P et TN et le corps d'étanchéité (4) est fabriqué en une matière plastique, qui est sélectionnée dans le groupe PEEK, PEI, PASU et LCP, **caractérisé en ce que** le flux de force destiné à la fixation et à la retransmission de bruit solidien du siège d'étanchéité (5) à une face de fixation (14) présente au moins une transition d'un composant métallique à un composant (15) en matière plastique et une transition du composant (15) en matière plastique à la face de fixation (14) d'un autre composant métallique, et **caractérisé en ce qu'**un joint d'étanchéité statique (8) fabriqué en un matériau élastomère, qui est formé par un joint à lèvre, est disposé entre les raccords P et TN dans une rainure extérieure de la douille de soupape (12) et est configuré de telle manière que, lors du montage du robinet à soupape dans un alésage de montage (13), lorsque la pression au raccord P n'est pas inférieure à la pression au raccord TN, il s'applique avec sa lèvre d'étanchéité sur l'alésage de montage (13), dans lequel le joint d'étanchéité (8) perd sa fonction d'étanchéité lorsque la pression au raccord TN dépasse la pression au raccord P, parce que la lèvre d'étanchéité du joint d'étanchéité (8) est soulevée de l'alésage de montage, dans lequel le joint d'étanchéité (8) libère un courant de fluide du raccord TN vers le raccord P.

2. Robinet à soupape selon la revendication 1, **caractérisé en ce que** dans un état non excité de l'électroaimant (2), un courant de fluide de P vers TN n'apparaît que lorsqu'une différence de pression entre les raccords P et TN dépasse une valeur limite de Δp_{G}, parce que la force de ladite différence de pression dépasse la somme des forces de ressorts (11, 16) et parce que le corps d'étanchéité (4) est en l'occurrence repoussé par lesdites forces hors d'un premier siège d'étanchéité (5), dans lequel dans l'état non excité de l'électroaimant (2) aucun courant de fluide de P vers TN n'apparaît, lorsque ladite différence de pression est inférieure à Δp_{G}, et **en ce que** dans l'état excité de l'électroaimant (2), même avec une différence de pression inférieure à Δp_{G}, il apparaît un courant de fluide de P vers TN, parce que la somme des forces de l'électroaimant (2) et de ladite différence de pression entre les raccords P et TN dépasse la force des ressorts (11, 16), dans lequel la somme des forces repousse le corps d'étanchéité (4) hors du siège d'étanchéité (5).

3. Robinet à soupape selon la revendication 1, **caractérisé en ce que** dans un état non excité de l'électroaimant (2) le ressort (11) repousse le corps d'étanchéité (4) hors du siège d'étanchéité (5) et **en ce que** dans un état excité de l'électroaimant la force de l'électroaimant (2) dépasse les forces du ressort (11) et de la différence de pression entre les raccords P et TN et repousse le corps d'étanchéité (4) dans le siège d'étanchéité (5).
